Europäisches Patentamt

**(19)** European Patent Office

Office européen des brevets

**(11)** Numéro de publication : **0 340 101 B1**

**(12)** FASCICULE DE BREVET EUROPEEN

**(45)** Date de publication du fascicule du brevet :
03.07.91 Bulletin 91/27

**(51)** Int. Cl.$^5$: **B29C 53/80,** B65H 59/04,
B65H 59/16, B65H 49/18,
B65H 59/40, B65H 59/18

**(21)** Numéro de dépôt : 89401174.1

**(22)** Date de dépôt : 25.04.89

**(54)** Cassette d'emmagasinage et de distribution de fil ou ruban sous tension préréglée, utilisable notamment sur une machine pour réaliser des pièces creuses par enroulement filamentaire.

**(30)** Priorité : 25.04.88 FR 8805438

**(43)** Date de publication de la demande :
02.11.89 Bulletin 89/44

**(45)** Mention de la délivrance du brevet :
03.07.91 Bulletin 91/27

**(84)** Etats contractants désignés :
BE CH DE ES GB IT LI NL SE

**(56)** Documents cités :
DE-A- 2 139 420
FR-A- 1 008 696
FR-A- 2 606 003
GB-A- 1 318 746

**(56)** Documents cités :
US-A- 1 541 562
US-A- 3 084 887
US-A- 3 531 057
US-A- 3 572 605

**(73)** Titulaire : AEROSPATIALE Société Nationale Industrielle
37, Boulevard de Montmorency
F-75781 Paris Cédex 16 (FR)

**(72)** Inventeur : Darrieux, Jean-Louis
272, Avenue Aristide Briand
F-33700 Merignac (FR)

**(74)** Mandataire : Lhuillier, René et al
ARMENGAUD JEUNE CABINET LEPEUDRY 6, rue du Fg. St-Honoré
F-75008 Paris (FR)

Jouve, 18, rue Saint-Denis, 75001 PARIS

## Description

L'invention qui se rapporte à un support de bobines de fil ou ruban destiné à être utilisé dans une machine à réaliser des pièces creuses par enroulement filamentaire concerne plus précisément une cassette d'emmagasinage et de distribution de fil ou ruban sous tension préréglée. Une telle cassette d'emmagasinage est connue de US-A-3.531.057.

Dans le domaine de l'enroulement filamentaire de fils ou de ruban de fibres sur un mandrin, il est courant de disposer celui-ci sur une machine qui l'anime d'un mouvement généralement de rotation entraînant le fil en l'enroulant sur lui-même. Selon d'autres techniques connues, par exemple pour la réalisation et le frettage de tubes, c'est un cadre tournant autour d'une pièce, qui enroule le fil autour de cette pièce pouvant elle-même être animée d'un mouvement relatif par rapport au cadre. Dans tous les cas, le fil ou la fibre destiné à former l'enroulement filamentaire est distribué à partir d'une bobine dévideuse, qui est habituellement constituée d'un support cylindrique en carton sur lequel le fil est enroulé, bobine qui est capable de maintenir le fil enroulé et qui le laisse se dévider sous l'effet de la traction provoquée par le mouvement du mandrin. Dans certains cas particuliers, plus précisément quand l'enroulement doit être assuré sur un support de forme irrégulière, il faut que le fil puisse être dévidé de la bobine avec une tension constante pour que le frettage soit assuré de façon également constante, quelle que soit la configuration de la pièce à enrouler. Cette tension doit en outre être réglable par l'utilisateur en fonction de l'enroulement recherché, et les bobines de distribution classiques ne donnent pas cette possibilité. Certains enroulements nécessitent aussi de grandes quantités de fils, et quand une bobine est vide il faut alors lui substituer une bobine neuve, et par conséquent interrompre le bobinage pour coller ensemble les brins des deux bobines. Si une tension préalable de distribution a été prévue sur la première, il faut reprendre le réglage pour que cette tension préalable soit aussi appliquée à la seconde, ce qui n'est pas toujours réalisable aisément avec les bobines dévideuses classiques.

Certes on connaît des systèmes de boîtiers contenant des fils ou rubans qui se déroulent lorsqu'on les tire et qui se réenroulent lorsqu'on les lâche, tels par exemple que l'enrouleur de câble électrique, le mètre-ruban, ou la laisse de chien. Mais aucun de ces systèmes ne possède les fonctions mécaniques nouvelles nécessitées par les techniques modernes d'enroulement filamentaire, qui nécessitent la possibilité de rechargement en fil, et d'un déroulement de fil en continu avec une tension constante et réglable comme indiqué plus haut.

L'invention vise à pallier aux inconvénients des distributeurs de fils connus en ce qu'elle propose une cassette d'emmagasinage et de distribution de fils, particulièrement conçue pour assurer des enroulements filamentaires à l'aide de tout support ayant un mouvement relatif par rapport à la pièce à bobiner, ladite cassette étant particulièrement utilisable dans une machine universelle de bobinage permettant de traiter des pièces de forme et de dimension variable.

A cet effet, l'invention a pour objet une cassette d'emmagasinage de fil ou ruban renfermant au moins une bobine montée sur un rouleau tournant et comportant des moyens permettant le déroulement du fil à l'encontre d'une force de réenroulement dudit fil autour de la bobine, dont l'organe s'opposant au déroulement de ladite bobine est disposé sur l'axe dudit rouleau et à l'intérieur de celui-ci, cet organe étant associé à un mécanisme de freinage, ledit mécanisme de freinage qui est réglable pour introduire une tension préalable du fil délivré par la cassette et qui est localisé également a l'intérieur du rouleau creux tournant, cassette selon laquelle elle est en outre pourvue d'un moyen complémentaire permettant si nécessaire d'augmenter en sortie de cassette la tension préalable du fil obtenue avec la bobine.

Plus précisément, l'organe s'opposant au déroulement de la bobine est un ressort concentrique à l'axe porteur de son rouleau support dont une extrémité est fixée audit rouleau et dont l'autre extrémité est liée au mécanisme de freinage, lequel est constitué d'un petit disque tournant librement sur l'extrémité fixe de l'axe de préhension de la cassette, et d'un patin de freinage susceptible de s'appliquer sur le disque et de s'en écarter sous l'action d'une vis prenant sur ledit axe.

Selon une variante l'organe s'opposant au déroulement de la bobine est un moteur monté selon son axe porteur qui agit en sens inverse du dévidement du fil par l'intermédiaire d'un coupleur frein électromagnétique qui est pilotable, un système de lecture de tension de fil, ainsi que la conduite du moteur et du coupleur étant connectés au support de cassette par des prises mâles au niveau des axes de préhension de la cassette.

Selon une autre caractéristique de l'invention le moyen complémentaire permettant d'augmenter la tension préalable du fil est constitué d'au moins un rouleau supplémentaire à surface caoutchoutée qui renferme un ressort dont une extrémité est liée à un mécanisme de freinage analogue à celui du rouleau à bobine, deux petits rouleaux complémentaires de maintien du fil s'appliquant contre le rouleau principal. D'autres caractéristiques particulières et avantages de l'invention apparaîtront à la lecture de la description qui va suivre de formes de réalisation prises à titre d'exemple non limitatifs et se référant aux dessins annexés qui représentent :

figure 1 une vue en coupe d'une cassette ;
figure 2 et 3 des vues schématiques de côté et de face de la cassette à une bobine ;

figure 4 une vue en coupe d'une variante de réalisation ;

figures 5 et 6 des vues schématiques de côté et de face d'une cassette selon la variante de la figure 4 ;

figure 7 une vue en coupe d'une autre variante de réalisation de la cassette selon la figure 1.

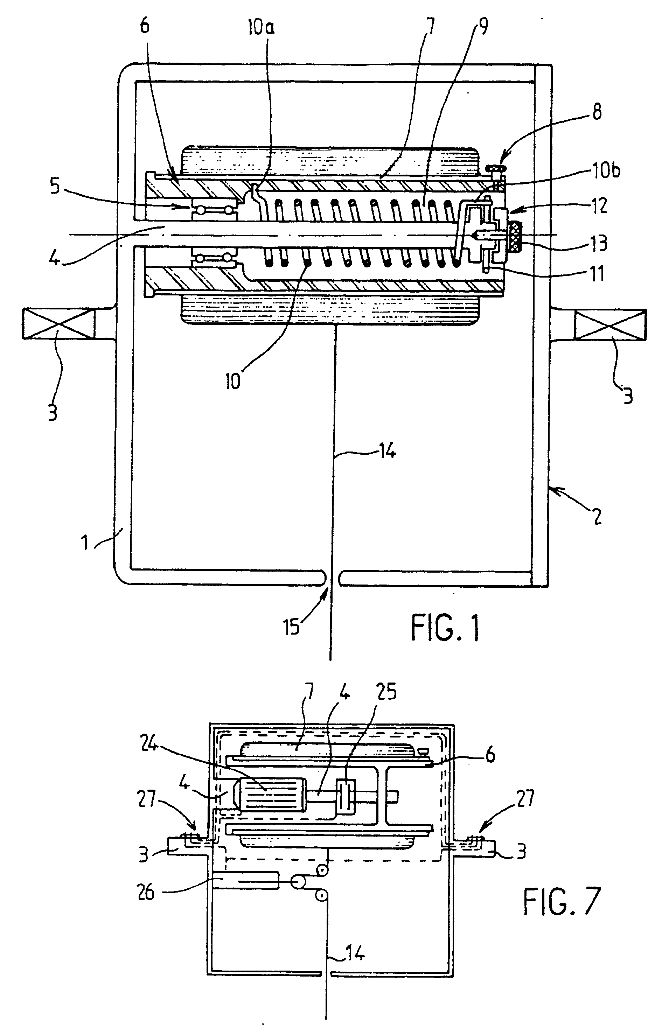

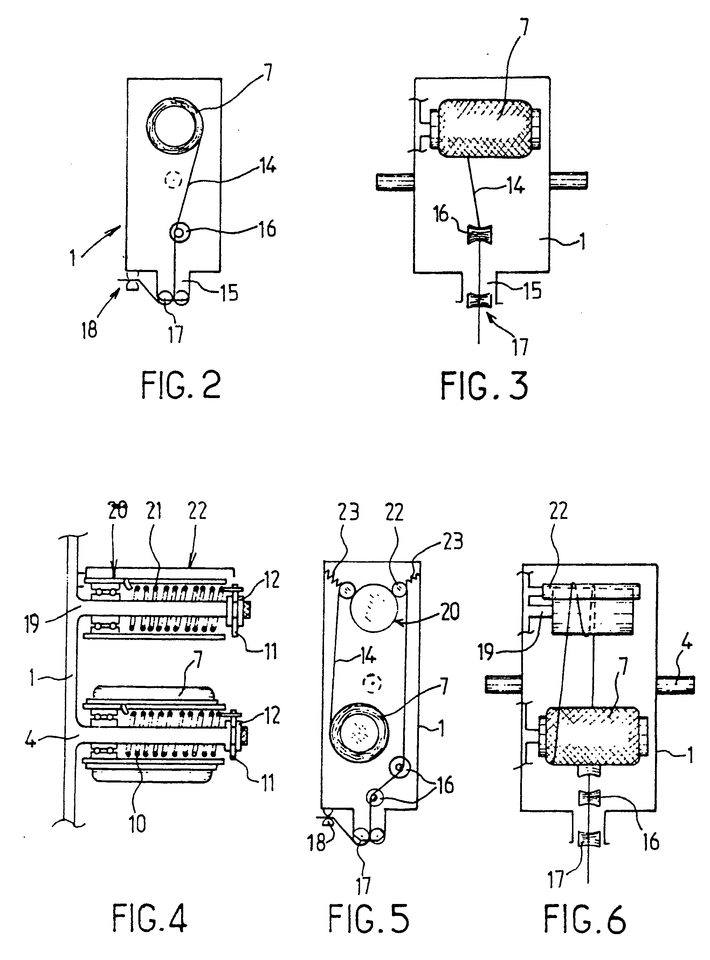

La cassette présentée schématiquement sur la figure 1 a la forme d'un boîtier 1 dont une face 2 est amovible pour permettre l'accès à l'intérieur. Elle est munie sur deux faces opposées d'axes de préhension 3 grâce auxquels elle peut être solidarisée à un support par l'un ou l'autre des deux axes ou par les deux. La cassette 1 porte un axe intérieur 4 sur lequel est fixé un roulement 5 portant un rouleau tournant 6 servant de support à une bobine de fil 7. La bobine est immobilisée sur le rouleau par la vis de blocage 8. Le rouleau 6 est creux et dans l'espace 9 ménagé entre sa face interne et l'axe 4 est placé un ressort 10 concentrique à l'axe dont une extrémité 10a est fixée au rouleau et dont l'autre extrémité 10b est liée à un petit disque 11 tournant librement sur l'extrémité fixe de l'axe 4. En regard du disque 11 est monté un patin de freinage 12 susceptible de s'appliquer sur le disque ou de s'en écarter sous l'action d'une vis 13 prenant sur l'axe 4. Le fil délivré par la bobine 7 sort de la cassette 1 par un orifice 15. On voit aux figures 2 et 3 que le fil 14 est orienté par un galet de renvoi 16 à l'intérieur de la cassette puis par des galets de sortie 17 au niveau de l'orifice 15, un mécanisme d'arrêt de fil 18 étant prévu sur la cassette 1 pour bloquer le fil dévidé.

Quand la bobine 7 est fixée sur son rouleau 6 et bloquée par la vis 8, on sort une partie de fil 14 par l'orifice 15. Puis en agissant sur la vis 13 on serre le patin 12 contre le disque de freinage 11 ce qui a pour effet de bloquer la rotation de ce dernier. Si on veut que la tension préalable du fil soit de 3 kg, on suspend au fil un poids de 3 kg. Le fil va alors se dérouler de la bobine et le poids va descendre. Pendant cette phase, puisque l'extrémité 10b du ressort 10 est immobilisée par le disque 11 qui est bloqué, l'autre extrémité 10a, tournant avec la bobine 7, va bander le ressort jusqu'à ce que le poids soit immobilisé. On débloque alors progressivement le patin de freinage 12 jusqu'à ce que le disque 11 commence à glisser sur lui et que le poids commence à descendre. La cassette est réglée et quand on immobilise le poids, le patin de freinage 12 maintient le ressort 10 bandé qui exerce sur le fil une tension de 3 kg. Si l'on fait revenir le poids en arrière, le fil va se réenrouler autour de la bobine avec une tension dégressive jusqu'à ce que le ressort soit revenu à sa position première au repos. C'est la longueur et la raideur du ressort qui détermine la longueur de fil possible que la cassette pourra réavaler. Cette tension préalable du ressort étant réglée on peut par exemple faire passer le fil sur le galet 16 puis sur les galets de sortie 17, et le tirer en bandant à nouveau le ressort, jusqu'à ce que le patin de freinage 12 se mette à nouveau à glisser. Le fil est alors prétendu à 3 kg et on le bloque avec le mécanisme d'arrêt de fil 18. On referme la partie amovible 2 de la cassette. Celle-ci est prête à être utilisée.

Cette disposition n'est cependant utilisable que pour des tensions préalables de fil relativement peu importantes, par exemple jusqu'à environ 3 kg. Au-delà la tension exerce une pression trop importante sur le fil des couches précédentes de la bobine et risque de les détériorer.

C'est pourquoi on prévoit une cassette qui augmente la tension préalable de fil obtenue avec la bobine adaptée à des tensions plus importantes pouvant aller par exemple jusqu'a 12 kg. Cette cassette 1 telle que représentée aux figures 4 à 6 présente aussi sur un axe intérieur 4 une bobine de fil 7 disposant du même ressort interne 10 et des mêmes mécanismes de freinage 11, 12. Par contre sur un autre axe intérieur 19 est monté un rouleau supplémentaire 20 dont la surface est recouverte d'une pellicule de caoutchouc. Ce rouleau 20 renferme aussi un ressort 21 dont une extrémité est liée au rouleau et dont l'autre extrémité est liée à un mécanisme de freinage (11, 12) analogue.

De part et d'autre du rouleau 20 sont montés deux petits rouleaux de maintien de fil 22, libres en rotation, rappelés contre le rouleau 20 par des petits ressorts 23. Les ressorts 10 et 21 sont déterminés de telle manière que la capacité de réavaler le fil par le rouleau caoutchouté 20 soit inférieure ou égale à celle de la bobine 7 afin d'éviter lors d'un réavalement du fil de la cassette, que ce fil 14 ne se détende entre la bobine 7 et le rouleau 20. Ceci dit le réglage des deux ressorts 10 et 21 s'effectue indépendamment et de la même façon que pour le réglage de la bobine, comme indiqué précédemment en référence à la figure 1, à l'aide de poids. On peut ainsi régler par exemple le frein de la bobine 7 à 2 kg et le frein du rouleau 20 à 10 kg. La tension préalable du fil en sortie de cassette sera donc de 12 kg.

Les cassettes précédemment décrites comportaient une seule bobine de fil. On peut envisager, sans sortir du cadre de l'invention, de charger la cassette de plusieurs bobines de fil qui seraient, par exemple, reliées en série, et dont chacune serait équipée du mécanisme de freinage décrit plus haut, de telle sorte qu'après l'épuisement d'une bobine, la bobine suivante puisse être utilisée en continu.

Pour la mise en fonctionnement, après avoir monté et verrouillé la bobine 7 sur son axe 4, on fait passer le fil 14, comme on le voit particulièrement aux figures 5 et 6, autour d'un premier rouleau de maintien de fil 22, puis autour du rouleau caoutchouté 20 et autour du second rouleau de maintien de fil 22. Puis le fil est tiré le long de galets de renvoi 16 jusqu'aux galets de sortie 17, puis vers l'extérieur jusqu'à ce que le patin de freinage 12 de la bobine et du rouleau se mettent à glisser. Le fil est alors prétendu et on peut le bloquer avec le mécanisme d'arrêt de fil 18.

Les cassettes ainsi décrites sont donc capables de réavaler du fil. Cela permet, si une cassette lors d'un bobinage n'est plus en mouvement, de garder le fil tendu, mais aussi d'éloigner la cassette de sa trajectoire et d'y revenir sans perte de tension et de trajectoire du fil, par exemple quand il s'agit d'assurer des liaisons entre fils d'une cassette à une autre.

De toute façon, ces cassettes peuvent être utilisées dans tout autre cas nécessitant une mise sous tension préalable du fil ou du ruban emmagasiné.

Selon une variante de réalisation illustrée à la figure 7, le rouleau tournant 6 servant de support à la bobine 7 ne dispose plus de ressort interne ni d'organe mécanique de freinage, mais en remplacement, un moteur 24 est monté selon l'axe 4 et agit en sens inverse du dévidement du fil par l'intermédiaire d'un coupleur électromagnétique 25 pilotable monté sur l'axe 4. Un système de lecture de tension de fil 26, interposé sur le trajet du fil 14, permet de connaître en permanence et avec précision la tension de fil délivré. Les énergies et informations nécessaires à la conduite du moteur et du coupleur ainsi que la lecture du système 26, passent par des prises mâles 27 au niveau des axes de préhension 3 de la cassette 1. Ces prises mâles sont connectées à des prises femelles correspondantes prévues sur un support de cassette non représenté. Ce type de cassette perfectionnée permet aussi la lecture et le réglage de la tension du fil pendant l'enroulement filamentaire, et permet de conserver la tension constante du fil lors de son réavalement par la cassette.

## Revendications

1. Cassette d'emmagasinage et de distribution de fil ou ruban (14) utilisable notamment sur une machine pour réaliser des pièces creuses par enroulement filamentaire, renfermant au moins une bobine (7) montée sur un rouleau tournant (6) et comportant des moyens permettant le déroulement du fil ou ruban à l'encontre d'une force de réenroulement dudit fil ou ruban autour de la bobine, l'organe s'opposant au déroulement de ladite bobine étant disposé sur l'axe (4) dudit rouleau (6) et à l'intérieur de celui-ci, et cet organe étant associé à un mécanisme de freinage (11, 12), qui est réglable pour introduire une tension préalable du fil ou ruban délivré par la cassette et qui est localisé également à l'intérieur du rouleau creux tournant (6), caractérisé en ce qu'elle est pourvue d'un moyen complémentaire (20, 22) permettant si nécessaire d'augmenter en sortie de cassette la tension préalable du fil ou ruban obtenue avec la bobine.

2. Cassette selon la revendication 1 dont l'organe s'opposant au déroulement de la bobine est un ressort concentrique (10) à l'axe de la bobine et logé à l'intérieur du rouleau support (6), caractérisée en ce qu'une de ses extrémités (10a) est fixée audit rouleau et l'autre extrémité (10b) est liée au mécanisme de freinage constitué d'un petit disque (11) tournant librement sur l'extrémité fixe de l'axe (4) et d'un patin de freinage (12) susceptible de s'appliquer sur le disque ou de s'en écarter sous l'action d'une vis (13) prenant sur l'axe (4).

3. Cassette selon la revendication 1, dont l'organe s'opposant au déroulement de la bobine est un moteur (24), caractérisée en ce que ledit moteur (24) est monté sur l'axe (4) à l'intérieur du rouleau support (6) et en ce qu'il agit en sens inverse du dévidement du fil ou ruban par l'intermédiaire d'un coupleur frein électromagnétique (25) pilotable monté sur l'axe (4), également à l'intérieur du rouleau support.

4. Cassette selon la revendication 3, caractérisée en ce qu'un système de lecture de tension de fil ou ruban (26), ainsi que la conduite du moteur (24) et du coupleur (25) sont connectés au support de cassette par des prises mâles (27) au niveau des axes de préhension de la cassette.

5. Cassette selon les revendications 1 à 3 caractérisée en ce que le moyen complémentaire permettant d'augmenter la tension préalable du fil ou ruban est constitué d'au moins un rouleau supplémentaire (20) à surface caoutchoutée qui renferme un ressort (21) dont une extrémité est liée au rouleau et dont l'autre extrémité est liée à un mécanisme de freinage (11, 12) analogue à celui du rouleau à bobine (7).

6. Cassette selon la revendication 5, caractérisée en ce que de part et d'autre du rouleau (20) sont montés deux petits rouleaux (22) de maintien du fil ou ruban, libres en rotation, rappelés contre le rouleau principal par des petits ressorts (23).

7. Cassette selon les revendications 1 et 5, caractérisée en ce que les ressorts (10) et (21) sont déterminés de telle manière que la capacité de réavaler le fil ou ruban par le rouleau caoutchouté (20) soit inférieure ou égale à celle de la bobine (7).

8. Cassette selon les revendications 1 et 5, caractérisée en ce que à l'aval d'un orifice de sortie (15) du fil ou ruban hors de la cassette (1), est prévu un mécanisme d'arrêt de fil ou ruban (18), sur ladite cassette.

## Ansprüche

1. Kassette zur Lagerung und Abgabe eines Fadens oder Bandes (14), insbesondere verwendbar bei einer Maschine zur Herstellung von Hohlkörpern nach einem Präzisionswickelverfahren, die wenigstens eine auf einer drehbaren Walze (6) angeordnete Spule (7) enthält und Mittel aufweist, die ein Abwickeln des Fadens oder Bandes entgegen einer Kraft zum Wiederaufwickeln dieses Fadens oder Bandes auf die Spule gestattet, wobei das dem Abwickeln dieser Spule entgegenwirkende Organ auf der Achse (4) der Walze (6) und im Inneren von dieser vorgesehen ist, und dieses Organ mit einem Bremsmechanismus (11, 12) in Verbindung steht, der zum Aufbringen einer Vorspannung auf den von der Kassette gelieferten Faden oder das Band einstellbar und der ebenfalls im Inneren der drehbaren Hohlwalze (6) angeordnet ist, dadurch gekennzeichnet, daß sie mit einem zusätzlichen Mittel (20, 22) versehen ist, das – falls notwendig – ein Vergrößern der mit der Spule erlangten Vorspannung auf den Faden oder das Band am Kassettenausgang gestattet.

2. Kassette nach Anspruch 1, bei der das dem Abwickeln der Spule entgegenwirkende Organ eine zur Achse der Spule konzentrische und im Inneren der Tragwalze (6) untergebrachte Feder (10) ist, dadurch gekennzeichnet, daß ihr eines Ende (10a) an der Walze befestigt ist und das andere Ende (10b) mit dem Bremsmechanismus verbunden ist, der von einer kleinen, um das mit der Achse (4) feste Ende frei drehbaren Scheibe (11) und von einem Bremsschuh (12) gebildet ist, der geeignet ist, unter Betätigung einer an der Achse (4) angreifenden Schraube (13) auf die Scheibe gedrückt oder von ihr entfernt zu werden.

3. Kassette nach Anspruch 1, bei der das dem Abwickeln der Spule entgegenwirkende Organ ein Motor (24) ist, dadurch gekennzeichnet, daß der Motor (24) auf der Achse (4) im Inneren der Tragwalze (6) angeordnet ist, und daß er entgegengesetzt zum Abwickelsinn des Fadens oder des Bandes unter Zwischenschaltung einer elektromagnetischen Bremskupplung (25) arbeitet, die steuerbar auf der Achse (4) und ebenfalls im Inneren der Tragwalze angeordnet ist.

4. Kassette nach Anspruch 3, gekennzeichnet dadurch, daß ein Ablesesystem für die Spannung des Fadens oder des Bandes (26), und die Leitungen für den Motor (24) und die Kupplung (25) mit dem Kassettenträger mittels Steckern (27) auf der Höhe der Greifachsen der Kassette verbunden sind.

5. Kassette nach den Ansprüchen 1 bis 3, dadurch gekennzeichnet, daß das zusätzliche Mittel, das das Vergrößern der Vorspannung auf den Faden oder das Band gestattet, aus wenigstens einer zusätzlichen Walze (20) mit einer gummibezogenen Oberfläche besteht, die eine Feder (21) enthält, deren eines Ende mit der Walze verbunden ist und deren anderes Ende mit einem dem der Walze für die Spule (7) entsprechenden Bremsmechanismus (11, 12) verbunden ist.

6. Kassette nach Anspruch 5, dadurch gekennzeichnet, daß beiderseits der Walze (20) zwei kleine Walzen (22) zum Halten des Fadens oder des Bandes frei drehbar angeordnet sind, die gegen die Hauptwalze mittels kleiner Federn (23) rückgestellt sind.

7. Kassette nach den Ansprüchen 1 und 5, dadurch gekennzeichnet, daß die Federn (10) und (21) derart ausgelegt sind, daß die Kapazität zum Anheben des Fadens oder des Bandes durch die gummierte Walze (20) geringer oder gleich der für die Spule (7) ist.

8. Kassette nach den Ansprüchen 1 und 5, dadurch gekennzeichnet, daß in Laufrichtung hinter einer Ausgangsöffnung (15) für den Faden oder das Band außerhalb der Kassette (1) ein Blockiermechanismus (18) für den Faden oder das Band an dieser Kassette vorgesehen ist.

## Claims

1. Cassette for storing and dispensing filament or tape (14), for use in particular on a machine for producing hollow bodies by filament winding, comprising at least one spool (7) mounted on a rotating roller (6) and having means permitting the unwinding of the filament or tape against a force re-winding the said filament or tape round the spool, the device opposing the unwinding of the said spool being arranged on the spindle (4) of the said roller (6) inside the latter, and the said device being associated with a braking mechanism (11, 12), which can be regulated in order to set an initial tension of the filament or tape dispensed by the cassette and which is also located inside the rotating hollow roller (6), characterised in that it is provided with a complementary means (20, 22) making it possible, if necessary, to increase at the cassette exit the initial tension of the filament or tape obtained with the spool.

2. Cassette according to Claim 1, in which the device opposing the unwinding of the spool is a spring (10) concentric with the spindle of the spool and housed inside the support roller (6), characterised in that one of its ends (10a) is fastened to the said roller and the other end (10b) is attached to the braking mechanism consisting of a small disc (11) rotating freely on the stationary end of the spindle (4) and of a brake block (12) capable being applied to the disc or moved away from the latter by the action of a screw (13) engaging on the spindle (4).

3. Cassette according to Claim 1, in which the device opposing the unwinding of the spool is a motor (24), characterised in that the said motor (24) is mounted on the spindle (4) inside the support roller (6) and in that it acts in the opposite direction to the unwinding of the filament or tape by way of a controllable electromagnetic brake coupler (25) mounted on the spindle (4), also inside the support roller.

4. Cassette according to Claim 3, characterised in that a filament or tape tension reading system (26), as well as the control of the motor (24) and of the coupler (25) are connected to the cassette support by male plugs (27) at the fixing spindles of the cassette.

5. Cassette according to Claims 1 to 3, characterised in that the complementary means making it possible to increase the initial tension of the filament or tape consists of at least one additional roller (20) which has a rubber-coated surface and contains a spring (21) having one end attached to the roller and the other end attached to a braking mechanism (11, 12) analogous to that of the spool roller (7).

6. Cassette according to Claim 5, characterised in that mounted on each side of the roller (20) there are two small rollers (22) for holding the filament or tape which rotate freely and are pressed against the main roller by small springs (23).

7. Cassette according to Claims 1 and 5, characterised in that the springs (10) and (21) are so arranged that the capacity for retracting the filament or tape by means of the rubber-coated roller (20) is less than or equal to that of the spool (7).

8. Cassette according to Claims 1 and 5, characterised in that downstream of an opening (15) for the emergence of the filament or tape from the cassette (1) a filament or tape arresting mechanism (18) is provided on the said cassette.

FIG. 1

FIG. 7

FIG. 2

FIG. 3

FIG. 4

FIG. 5

FIG. 6